# FASCICULE DE BREVET EUROPEEN

(11) **EP 2 639 968 B1**
(45) Date de publication et mention de la délivrance du brevet: **20.08.2014**
(21) Numéro de dépôt: 13158324.7
(22) Date de dépôt: 08.03.2013
(51) Int. Cl.: H04B 3/54, G01D 4/00, H04L 12/28

(54) **Procédé de localisation de points consommateurs de courant dans un système de distribution de courant électrique, dispositif de traitement et système de distribution de courant électrique associés.**
Verfahren, Einrichtung und entsprechende Netzwerk zur Ortung einiger Elektrozahler in einem Elektroversorgungsnetzwerk.
Method for localising meters in an electricity distribution network, processing device and associated electricity distribution network

(30) Priorité: 12.03.2012 FR 1252208
(43) Date de publication de la demande: 18.09.2013
(73) Titulaire: Schneider Electric Industries SAS, 92500 Rueil-Malmaison (FR)
(72) Inventeur: Lassalle, Christian, 38330 Saint-Ismier (FR); Waterlot, Frédéric, 73190 St Baldoph (FR); Contini, Erick, 38240 Meylan (FR); Clemence, Michel, 73000 Chambery (FR); Coutelou, Olivier, 38000 Grenoble (FR)
(74) Mandataire: Myon, Gérard Jean-Pierre

(56) Documents cités:
- EP-A2- 2 458 340
- WO-A1-2009/123586
- WO-A2-02/091680
- US-A1- 2010 007 219

## Description

La présente invention concerne les systèmes de distribution de courant électrique depuis un noeud central à destination de points consommateurs de courant associés chacun à au moins une charge électrique. Dans ces systèmes de distribution, des câbles de courant respectifs connectent chaque point consommateur au noeud central. Dans des cas, un compteur de courant respectif disposé au niveau de chaque point consommateur est adapté pour mesurer l'énergie consommée par le point consommateur associé.

Le noeud central est par exemple un poste, dit poste MT/BT, interfacé entre le réseau de distribution à moyenne tension (MT) et le réseau de distribution basse tension (BT) auquel les utilisateurs domestiques sont raccordés.

Les réseaux BT sont denses, parfois enterrés, mixant des matériels et des câbles d'âge variable. Dans certains cas, ils sont exploités par des régies d'électricité distinctes, et ont pu faire l'objet de modifications, d'extensions et de réparations, parfois disparates, sans que ces événements aient été tracés, ni répertoriés.

Ainsi la constitution effective des réseaux BT est parfois inconnue. Notamment, il n'est pas toujours possible de faire le lien entre un câble au départ du poste MT/BT et un compteur de courant associé à un point consommateur. Cette méconnaissance de la structure précise des réseaux BT est la source de problèmes divers. Par exemple, elle donne lieu à une mauvaise estimation de la qualité des liaisons du réseau, à des délais de dépannage importants, à la survenue de déséquilibre entre les puissances consommées par les phases de réseaux triphasés, à une localisation et une caractérisation malaisées des vols d'énergie électrique ou des fraudes.

Le document US 2010/0007219 décrit un système pour détecter automatiquement la configuration d'un système dans lequel des transformateurs de distribution transmettent par Courant Porteur en Ligne (CPL) leur identifiant à leurs dispositifs consommateurs, qui eux-mêmes adressent ensuite un message à un dispositif central avec à la fois leur propre identifiant et celui de leur transformateur de distribution. Un tel système permet de faire le lien entre les transformateurs de distribution et leurs dispositifs consommateurs. Cependant dans un tel système, des problèmes de diaphonie peuvent survenir donnant lieu à la réception de l'identifiant d'un transformateur de distribution par des dispositifs consommateurs rattachés à d'autres transformateurs de distribution, et à une détermination erronée de la structure du système de distribution En outre, si un tel système permet de localiser les postes MT/BT sur leur départ MT, il ne permet pas de localiser un compteur d'abonné sur un départ BT.

A cet effet, suivant un premier aspect, l'invention a pour objet un procédé de localisation de points consommateurs de courant dans un système de distribution de courant électrique, dans lequel des câbles comportant chacun un départ partant d'un noeud central fournissent du courant électrique à destination de points consommateurs respectifs dotés de premiers moyens de télécommunications de type Courant Porteur en Ligne dits CPL, au moins un module de mesure étant adapté pour recevoir, au niveau du départ de chaque câble, des messages CPL via des seconds moyens de télécommunications de type CPL et pour mesurer un niveau de puissance desdits messages reçus, ledit procédé étant **caractérisé en ce qu'il** comprend les étapes suivantes, suite à la réception, sur des départs de câbles distincts, d'un même message CPL émis par un point consommateur et indiquant un identifiant dudit point consommateur :
i/ mesures, par au moins le module de mesure, du niveau de puissance sur chacun desdits départs de câbles distincts, dudit message reçu associé audit identifiant indiqué ;
ii/ comparaison desdits niveaux de puissance mesurés ;
iii/ sélection du niveau de puissance maximum parmi les niveaux de puissance comparés ;
iv/ détermination du câble au départ duquel a été mesuré le niveau de puissance sélectionné comme étant un câble d'alimentation dudit point consommateur.

Un tel procédé permet ainsi de pouvoir identifier à quel câble au départ d'un poste MT/BT, correspond un compteur électrique et/ou un point consommateur, de pouvoir connaître la typologie du réseau BT et d'améliorer en conséquence les opérations de réparation, de maintenance, l'estimation de la qualité des liaisons du réseau BT, la localisation du vol d'énergie, etc.

La présente invention permet ainsi notamment de localiser les compteurs d'abonnés sur la phase du départ BT qui les alimente.

Dans des modes de réalisation, le procédé de localisation de points consommateurs de courant dans un système de distribution de courant électrique suivant l'invention comporte en outre une ou plusieurs des caractéristiques suivantes :
- le module de mesure étant en outre adapté pour télétransmettre des données à destination d'un dispositif de collecte, ledit procédé comprenant une étape de télétransmission au dispositif de collecte par au moins ledit module de mesure, d'un ensemble de données indiquant l'identifiant du point consommateur ayant émis le message, ledit niveau de puissance mesuré par ledit point de mesure et un identifiant du câble au départ duquel est a été mesuré ledit niveau, en vue de la détermination par ledit point de collecte du câble d'alimentation dit point consommateur ;
- la télétransmission est réalisée à l'aide des seconds moyens de communication CPL ;
- le point consommateur comportant un compteur électrique adapté pour s'incrémenter en fonction du courant consommé par ledit point consommateur associé, ledit message CPL émis par le point consommateur comporte des données indiquant un relevé de consommation électrique par ledit point consommateur ;
- un filtre est disposé entre le noeud central et un module de mesure installé sur un câble, en vue d'atténuer un signal CPL traversant le filtre ;
- l'application du filtre entre le noeud central et un module de mesure est télécommandable ; et
- pour un câble donné, on détermine un classement de points consommateurs déterminés à l'étape iv/ comme alimentés par ledit câble donné, en terme de distance entre chacun d'eux et le départ du câble, en fonction d'un classement des niveaux de puissance sélectionnés pour lesdits points consommateur.

Suivant un deuxième aspect, l'invention a pour objet un module de mesure comprenant des premiers moyens de télécommunications de type Courant Porteur en Ligne dits CPL par l'intermédiaire d'un câble conducteur de courant électrique et adapté pour, suite à la réception sur ledit câble d'un message CPL indiquant l'identifiant d'un point consommateur ayant émis le message, mesurer un niveau de puissance dudit message reçu et télétransmettre à destination d'un dispositif de collecte, un ensemble de données indiquant l'identifiant du point consommateur ayant émis le message, le niveau de puissance du message mesuré et un identifiant du module de mesure ou du câble conducteur.

Suivant un troisième aspect, l'invention a pour objet un dispositif de collecte d'un système de distribution de courant électrique à destination de points consommateurs, comprenant des moyens de télécommunications avec au moins un module de mesure et adapté pour recevoir au moins dudit module de mesure, via lesdits moyens de télécommunication, des ensembles de données indiquant chacun un identifiant d'un point consommateur, un niveau de puissance mesuré par le dispositif de mesure sur un câble d'un message CPL envoyé par ledit point consommateur et un identifiant du câble ou du module de mesure ; ledit dispositif de collecte étant en outre adapté pour comparer des niveaux de puissance, relatifs à un même message émis par un point consommateur déterminé qui ont été mesurés sur des câbles distincts et indiqués dans des ensembles de données reçus et, pour sélectionner un niveau de puissance maximum parmi les niveaux comparés et pour déterminer le câble au départ duquel a été mesuré le niveau de puissance sélectionné comme étant un câble d'alimentation dudit point consommateur déterminé.

Suivant un quatrième aspect, l'invention a pour objet un système de distribution de courant électrique comprenant :
- des câbles comportant chacun un départ et distribuant du courant électrique à destination de points consommateurs respectifs,
- un ou plusieurs module(s) de mesure suivant le deuxième aspect de l'invention, adapté(s) pour mesurer des niveaux de puissances de messages CPL au départ de plusieurs câbles d'alimentation,
- un dispositif de collecte suivant le troisième aspect de l'invention.

L'invention sera mieux comprise à la lecture de la description qui suit et à l'examen des figures qui l'accompagnent. Ces figures sont données à titre illustratif, mais nullement limitatif de l'invention. Ces figures sont les suivantes :
- la figure 1 est une vue d'une partie d'un réseau de distribution électrique ;
- la figure 2 est une vue détaillée d'une partie du réseau de distribution électrique représenté en figure 1 ;
- la figure 3 représente une vue d'un point consommateur (comprenant un compteur d'abonné et sa charge) dans un mode de réalisation de l'invention ;
- la figure 4 est un organigramme d'un procédé dans un mode de réalisation de l'invention ;
- la figure 5 représente un système de filtrage dans un mode de réalisation de l'invention.

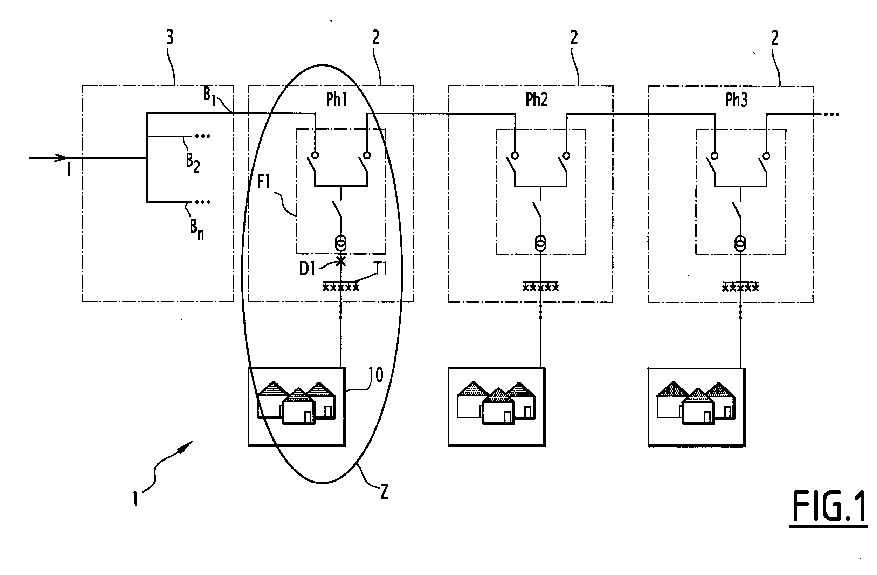

Sur la figure 1, un départ MT (Moyenne Tension) d'un réseau de distribution électrique 1 est représenté schématiquement, comprenant un poste de transformation HT/MT (Haute Tension/Moyenne Tension) 3 doté de plusieurs branches de départ triphasées MT B₁, ... Bₙ.

On va décrire ci-dessous le réseau de distribution MT et BT correspondant à la branche B₁, similaire aux réseaux correspondant aux autres branches.

La branche MT B₁ relie une pluralité de postes de transformation MT/BT (Moyenne Tension/Basse Tension) 2, dont trois ont été représentés en figure 1.

Typiquement ce nombre de postes de transformation MT/BT 2 est compris entre 3 et 15. Les postes de transformation MT/BT 2 sont disposés entre le réseau de distribution MT et le réseau de distribution BT.

Par exemple, la tension sur les réseaux MT est de 3 à 33 kV et la tension sur les réseaux BT est de 110 V à 600 V.

Ci-dessous le poste de transformation MT/BT 2 et le réseau BT alimenté par ce poste de transformation MT/BT, qui sont situés dans la bulle Z sur la figure 1, vont être décrits. Les autres postes de transformation MT/BT et réseaux BT alimentés par ces postes présentent une structure similaire.

Le poste de transformation MT/BT 2 comprend un transformateur F₁, adapté pour effectuer la conversion de la moyenne tension vers la basse tension, alimenté par la branche MT B₁.

Dans le poste de transformation MT/BT 2, le convertisseur F₁ est suivi d'un noeud D₁ en amont d'un tableau T₁ de répartition.

Ce tableau T₁ répartit, dans le poste de transformation MT/BT 2, le courant reçu au point de départ D₁ sur un certain nombre de départs BT (Basse Tension) triphasés convoyant un courant électrique à destination d'une pluralité de consommateurs 10, monophasés ou triphasés- typiquement entre 20 et 200 consommateurs généralement équipés d'un compteur électrique.

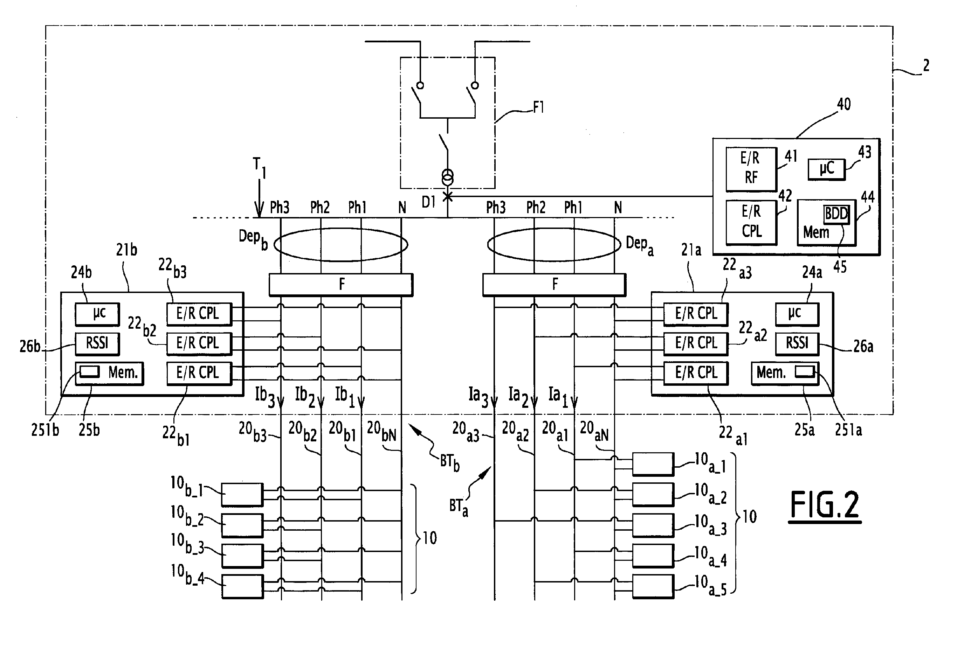

La figure 2 est une vue plus détaillée du poste de transformation MT/BT 2 et du réseau BT alimenté par ce poste de transformation MT/BT 2, qui sont situés dans la bulle Z de la figure 1.

Le tableau de répartition T₁ alimente un certain nombre de départ BT triphasés. Typiquement, ce nombre est généralement compris entre 2 et 10. Deux départs triphasés Depₐ et Dep_{b} ont été considérés en référence à la figure 2.

Ainsi du tableau de répartition T₁, pour le départ triphasé Depₐ, quatre câbles monophasés 20ₐ₁, 20ₐ₂, 20ₐ₃, 20_{aN}, correspondant respectivement à la première, deuxième, troisième phases et au neutre en tension, partent à destination de consommateurs 10. Les câbles 20ₐ₁, 20ₐ₂. 20ₐ₃ sont adaptés pour délivrer un courant électrique, respectivement Iₐ₁, Iₐ₂, Iₐ₃ à destination de cette pluralité de consommateurs 10.

Similairement du tableau de répartition T₁, pour le départ triphasé Dep_{b}, quatre câbles monophasés 20_{b1}, 20_{b2}, 20_{b3}, 20_{bN}, correspondant respectivement à la première, deuxième, troisième phases et au neutre en tension, partent à destination de consommateurs respectifs 10. Les câbles 20_{b1}, 20_{b2}, 20_{b3} sont adaptés pour délivrer un courant électrique, respectivement I_{b1}, I_{b2}, I_{b3} à destination de cette pluralité de consommateurs 10.

Dans le poste MT/BT 2, un dispositif de traitement 40, nommé aussi concentrateur, est relié électriquement au noeud D₁ en amont du tableau de répartition T₁.

Le dispositif de traitement 40 comporte un module d'émission/réception radiofréquence 41, un module d'émission/réception CPL (« Courants Porteurs en Ligne ») 42, un microcontrôleur 43 et une mémoire 44. Une base de données 45 est stockée dans la mémoire 44 du dispositif de traitement 40.

Chaque câble 20ₐᵢ, 20_{bi} (avec i compris entre 1 et 3) alimente des (entre un et 10) points consommateurs, par exemple une habitation ou un groupe d'habitation, une usine etc, grâce à des dérivations réparties le long du câble.

On considère ici les points consommateurs 10_{a_1}, 10_{a_2}, 10_{a_3}, 10_{a_4}, 10_{a_5}, 10_{b_1}, 10_{b_2}, 10_{b_3}, 10_{b_4}.

Généralement, la répartition des points consommateurs par rapport aux câbles identifiés au départ du poste de transformation MT/BT 2 est inconnue, le lien entre les départs de câbles dans le poste de transformation et les consommateurs n'étant pas évident à faire, puisque dans de nombreux cas, les câbles ont des sections enterrées, ont été modifiés ou dérivés de nombreuses fois etc.

La longueur de ces câbles peut être variée et atteindre 200 mètres.

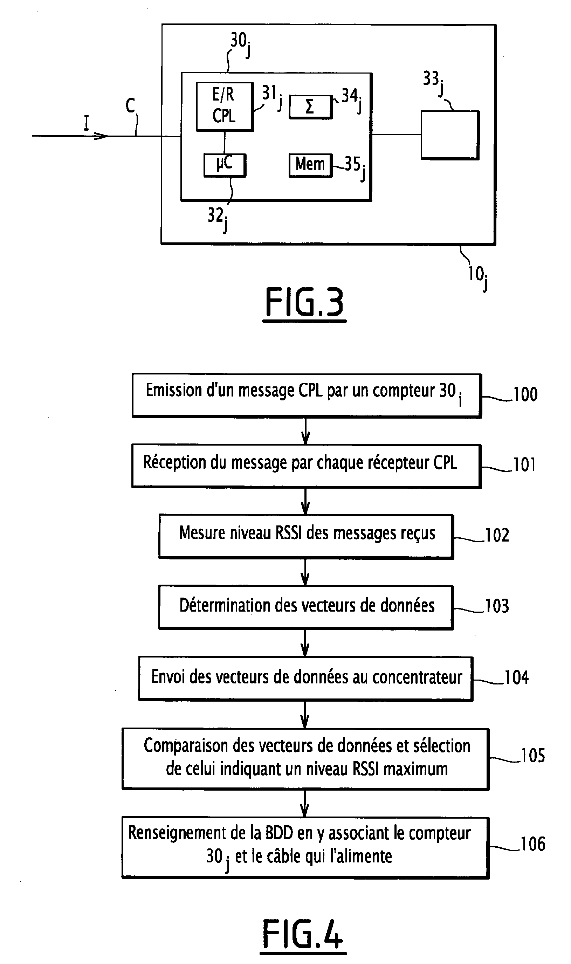

La structure d'un point consommateur 10ⱼ, pour j prenant les valeurs a_1, a_2, a_3, a_4, a_5, b_1, b_2, b_3, b_4, est décrite en référence à la figure 3.

Un point consommateur 10ⱼ comprend un compteur de courant 30ⱼ qui est disposé entre le câble C qui l'alimente (un des câbles parmi les câbles 20ₐ₁, 20ₐ₂. 20ₐ₃, 20_{b1}, 20_{b2}, 20_{b3}) et la charge électrique 33ⱼ qui est la charge électrique réelle du point consommateur 10ⱼ.

Dans le mode de réalisation considéré, le compteur de courant 30ⱼ comporte un module d'émission-réception CPL 31ⱼ, un microcontrôleur 32ⱼ, un module de comptage 34ⱼ électronique ou électromécanique, et une mémoire 35ⱼ.

Lorsque la charge 33j consomme du courant I fourni par le câble C alimentant électriquement le point consommateur 10ⱼ, le module de comptage 34ⱼ est adapté pour mesurer l'énergie consommée par la charge 33ⱼ et pour incrémenter en fonction le décompte des unités d'énergie consommées, par exemple exprimé en kilowattheures (kWh).

Dans le mode de réalisation considéré, les compteurs des points consommateurs ou aux moins certains d'entre eux, sont adaptés pour transmettre à fréquence régulière, les données de comptage élaborées par le module de comptage à destination du dispositif de traitement 40, par transmission par CPL.

La fréquence peut être par exemple de l'ordre d'une fois par dizaine de minutes, jusqu'à une fois par jour.

Ainsi en référence à un point consommateur 10ⱼ, les données de comptage sont fournies par le module de comptage 34ⱼ au module d'émission/réception CPL 31ⱼ, sous le pilotage du microcontrôleur 32ⱼ. Le module d'émission/réception CPL 31ⱼ prépare alors ces données de manière à les rendre conforme au protocole CPL, puis les transmet, sur le câble d'alimentation électrique auquel le point consommateur est relié, à destination du module de traitement 40 par CPL.

Pour rappel, le principe des CPL, connu, consiste à superposer au courant électrique alternatif transitant par le câble, un signal électrique de plus haute fréquence et de faible énergie comportant les données à transmettre. Le signal CPL est reçu par tout récepteur CPL qui se trouve sur le même réseau électrique.

Dans un mode de réalisation, le dispositif de traitement 40 reçoit les relevés émis par les différents compteurs reliés au réseau de distribution BT partant du tableau de répartition T₁, les stocke par exemple dans la mémoire 44, puis le cas échéant, effectue une ou plusieurs opérations de concaténation, moyenne etc, avant de transmettre à son tour, le cas échéant, des informations résultantes à un niveau supérieur du réseau. Les données de comptage en quasi-temps réel de chacun des compteurs sont donc disponibles dans le poste MT/BT 2.

Les messages CPL comportent un champ indiquant un identifiant de l'émetteur du message et un champ indiquant un identifiant d'un destinataire du message. Ces identifiants sont par exemple des adresses CPL.

Les messages CPL, de type transmettant les relevés ou autres, émis par les compteurs, se retrouvent sur le tableau de répartition T₁, et par la suite sur l'ensemble des câbles reliés au tableau de répartition T₁ du poste MT/BT considéré, voire, par diaphonie, sur les câbles BT reliés aux autres postes MT/BT 2.

La réception de ces messages ne permet donc pas de déterminer la répartition des compteurs 30ⱼ, avec j prenant les valeurs a_1, a_2, a_3, a_4, a_5, b_1, b_2, b_3, b_4, sur les câbles 20ₐᵢ, 20_{bi} (avec i compris entre 1 et 3) lorsque celle-ci est ignorée.

Dans un mode de réalisation de l'invention, et en référence à la figure 2, un module de mesure, respectivement 21ₐ, 21_{b}, est installé sur chaque départ triphasé respectivement Depₐ, Dep_{b}, dans le poste de transformation MT/BT 2, en aval du tableau de répartition T₁.

La base de données 45 associe un identifiant de chaque câble à un identifiant du module de mesure installé sur ledit départ triphasé dont ledit câble part et à un identifiant de la phase à laquelle correspond le câble.

Le module de mesure 21ₐ comprend trois modules d'émission/réception CPL respectivement 22ₐ₁, 22ₐ₂, 22ₐ₃, un microcontrôleur 24ₐ, un élément 26ₐ de mesure du niveau de puissance de messages CPL et une mémoire 25ₐ.

L'élément 26ₐ de mesure du niveau de puissance de messages CPL est adapté pour mesurer un niveau de puissance (niveau RSSI), en référence au câble de neutre 20_{aN}, d'un signal correspondant à un message CPL reçu au niveau d'un quelconque module de mesure, respectivement 22ₐ₁, 22ₐ₂, 22ₐ₃, sur le câble respectivement 20ₐ₁, 20ₐ₂, 20ₐ₃.

La mémoire 25ₐ comprend une application logicielle 251ₐ adaptée pour s'exécuter sur le microcontrôleur 24ₐ.

Similairement, le module de mesure 21 b comprend trois modules d'émission/réception CPL respectivement 22_{b1}, 22_{b2}, 22_{b3}, un microcontrôleur 24_{b}, un élément 26_{b} de mesure du niveau de puissance de messages CPL et une mémoire 25_{b}.

L'élément 26_{b} de mesure du niveau de puissance de messages CPL est adapté pour mesurer un niveau de puissance, en référence au câble de neutre 20_{bN}, d'un signal correspondant à un message CPL reçu au niveau de chaque module de mesure respectivement 22_{b1}, 22_{b2}, 22_{b3}, sur le câble respectivement 20_{b1}, 20_{b2}, 20_{b3}.

Suivant les modes de réalisation, les modules d'émission/réception CPL sont de nature inductive ou capacitive.

Dans les communications CPL, le dispositif de traitement 40, les modules de courant 21ₐ, 21_{b} et les compteurs 30_{a_1}, 30_{a_2}, 30_{a_3}, 30_{a_4}, 30_{a_5}, 30_{b_1}, 30_{b_2}, 30_{b_3}, 30_{b_4}, sont identifiés par des identifiants, par exemple des adresses CPL respectives.

Dans un mode de réalisation d'un procédé de localisation de points consommateurs dans le système de distribution de courant électrique 1, les étapes suivantes sont mises en oeuvre, en référence à la figure 4.

Dans une étape 100, un compteur 30ᵢ parmi les compteurs 30_{a_1}, 30_{a_2}, 30_{a_3}, 30_{a_4}, 30_{a_5}, 30_{b_1}, 30_{b_2}, 30_{b_3}, 30_{b_4}, émet un message CPL, indiquant l'adresse 30ᵢ.

Comme expliqué ci-dessus, dans une étape 101, chaque récepteur CPL, dans les modules de mesure 21ₐ, 21_{b}, et dans le contrôleur 40, reçoit ce message, indépendamment de l'identifiant de son destinataire indiqué dans le message.

Puis, lors de cette réception du message CPL par les récepteurs CPL 22ₐ₁, 22ₐ₂, 22ₐ₃, respectivement 22_{b1}, 22_{b2}, 22_{b3}, chaque module de mesure 21ₐ, respectivement 21_{b}, est adapté pour mettre en oeuvre les étapes ci-dessous, suite à l'exécution sur le microcontrôleur 24ₐ, respectivement 24_{b}, de l'application logicielle 251ₐ, respectivement 251_{b}.

Ainsi, dans une étape 102, chaque module de mesure 21ₐ, respectivement 21_{b}, mesure, à l'aide de l'élément 26ₐ, respectivement 26_{b}, de mesure du niveau de puissance, le niveau de puissance du message reçu, par exemple un niveau de signal reçu de type RSSI (en anglais « Received Signal Strengh Indication », cf. norme IEEE 802.11), par chacun des récepteurs CPL 22ₐ₁, 22ₐ₂, 22ₐ₃, respectivement 22_{b1}, 22_{b2}, 22_{b3}.

Dans une étape 103, un vecteur de données est alors déterminé par chaque module de mesure 21_{a,} respectivement 21_{b} et pour chaque phase, comprenant :
- l'identifiant dudit module de mesure,
- la phase concernée (phase 1 pour le récepteur 22ₐ₁ et pour le récepteur 21 _{b1}, phase 2 pour le récepteur 22ₐ₂ et le récepteur 21 _{b2}, phase 3 pour le récepteur 22ₐ₃ et le récepteur 21 _{b3}),
- l'identifiant du compteur 30ᵢ à l'origine du message CPL,
- le niveau de puissance mesuré, par le module de mesure, du message reçu sur la phase concernée.

Dans une étape 104, chaque vecteur ainsi déterminé par le module de mesure 21ₐ, respectivement 21 _{b} est alors envoyé par voie CPL depuis ledit module de mesure à destination du concentrateur 40.

Dans une étape 105, le concentrateur 40 compare les niveaux de puissance mesurés des différents vecteurs reçus comportant la même adresse de compteur 30ᵢ et il sélectionne parmi les vecteurs ainsi comparés, celui présentant le niveau de puissance maximum.

Dans une étape 106, le concentrateur 40 renseigne la base de données 45 en associant au compteur 30ᵢ, la phase indiqué dans le vecteur sélectionné et l'identifiant du module de mesure indiqué dans le vecteur sélectionné.

Ainsi la présente invention permet de déterminer à quel départ monophasé de câble au niveau d'un poste MT/BT 2 correspond un point consommateur, via la correspondance figurant dans la BDD 45 entre l'identifiant de chaque câble monophasé d'une part et d'autre part les identifiants de module de mesure et de phase.

Les étapes 100 à 106 sont ensuite réitérées pour des messages CPL envoyés successivement par des compteurs distincts et permettent ainsi la localisation des différents compteurs équipés d'émetteurs/récepteurs CPL.

La présente invention est ainsi très utile lorsque la structure et le cheminement de la portion de câble intermédiaire n'est pas connu préalablement, en permettant de déterminer au niveau des départs de câble, quel est le câble qui alimente le compteur 30ᵢ.

Dans un mode de réalisation, dans une phase de localisation des compteurs, le concentrateur 40 commande successivement à chaque compteur d'émettre un message CPL spécifique afin de mettre en oeuvre les étapes du procédé de localisation ci-dessus.

Dans un autre mode de réalisation, ces étapes sont réalisées à l'aide de messages non spécifiquement dédiés à la localisation, par exemple à l'aide des messages de relevés de compteurs.

Dans le mode de réalisation décrit en référence à la figure 4, les étapes 106 de comparaison des vecteurs et de renseignements de la base de données 45 sont faites après la réalisation des étapes 100 à 104 relatives à un message considéré émis par un compteur, avant la réalisation des étapes 100 à 104 relatives à un autre compteur. Dans un autre mode de réalisation, les étapes 100 à 104 sont réalisées pour des compteurs successifs, les étapes 105 et 106 n'étant pas réalisées entre ces deux itérations. Puis une fois que le concentrateur 40 dispose de tous les vecteurs de données déterminés pour tous les compteurs, il itère alors les étapes 105 et 106 en prenant en compte pour chaque nouvelle itération un compteur différent.

Dans le mode de réalisation, le vecteur de données indique l'identifiant de départ de câble (ou de module de mesure) et la phase. Dans un autre mode de réalisation, le vecteur de données indique à la place un identifiant de câble monophasé lui-même.

Dans un autre mode de réalisation, un point consommateur ne dispose pas de compteur, mais comporte un émetteur/récepteur CPL pour la mise en oeuvre d'un procédé selon l'invention.

Dans le mode de réalisation décrit, les modules de mesure 21ₐ, 21_{b} communiquent les vecteurs au concentrateur 40 par voie CPL. Dans un autre mode de réalisation, ces vecteurs sont communiqués par d'autres moyens de communication, par exemple une liaison de télécommunication radio etc.

Dans un mode de réalisation, le concentrateur 40 est en outre adapté pour classer par niveau de puissance de signal reçu décroissant les compteurs affectés à un câble donné et d'en déduire un classement des compteurs en fonction de leur proximité par rapport au poste de transformation MT/BT (le niveau de puissance maximum correspondant à la plus grande proximité).

Dans un mode de réalisation, afin d'augmenter l'écart entre les différents niveaux de puissance mesurés pour un message émis par un même compteur, un système de filtrage F est ajouté entre le départ de câbles Depₐ, respectivement Dep_{b}, et le module de mesure 21ₐ, respectivement 21_{b} situé en aval du départ, comme représenté en figure 2.

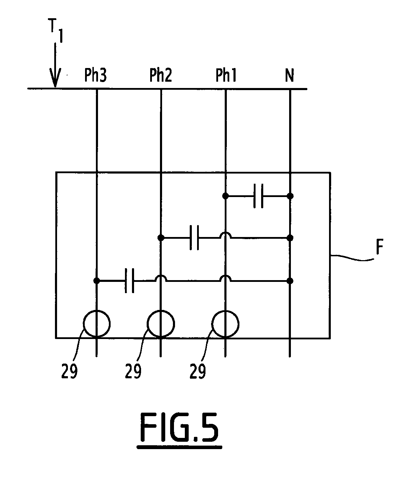

Dans un mode de réalisation représenté en figure 5, le filtrage est capacitif. Une capacité C de classe X2 par exemple est disposée entre le neutre et chacune des phases d'un même départ (par exemple la capacité prend une valeur dans la plage de100 nF à quelques micro F, ce qui correspond à un objectif d'atténuation du niveau de puissance d'une valeur de 2 dB environ).

Dans ce mode de réalisation, il convient que les coupleurs inductifs ou capacitifs des émetteurs/récepteurs CPL dans les modules de mesure 21ₐ, 21_{b}, soient éloignés au maximum des capacités du filtre F, pour les deux raisons suivantes.

Tout d'abord l'inductance linéique du câble d'alimentation est bénéfique au filtrage ; et plus la distance entre le coupleur et la capacité est grande, plus l'inductance sera importante. Par ailleurs, si les trois condensateurs sont placés près des coupleurs, il y aura une uniformisation des niveaux des signaux entre phases, ce qui réduira l'efficacité du procédé selon l'invention. Typiquement, la distance sur une même phase entre la capacité du filtre et le coupleur est comprise dans la plage [0,1 ; 2] exprimée en mètres.

Dans un mode de réalisation, ce filtrage peut être amélioré par ajout d'un élément 29 de ferrite clipsable sur chacun des câbles associés aux phases respectives, par exemple correspondant à une inductance de 20 nanohenrys, qui permet d'augmenter localement la valeur d'inductance du câble. Le filtrage ainsi réalisé au niveau de chaque phase combinant la capacité et l'inductance devient bien plus efficace qu'une unique capacité lorsque le courant dans le câble est inférieur à 10 ampères. Il faudra donc pour avoir un filtrage efficace attendre que le courant circulant dans le câble soit inférieur à 10 ampères avant de mettre en oeuvre le procédé de localisation selon l'invention. Cette disposition présente l'avantage de ne pas nécessiter pour le filtrage l'installation d'inductances aptes à supporter le courant nominal (typiquement ayant une intensité de 400 à 630 ampères).

Dans un mode de réalisation, par exemple dans le cas où le filtre F atténuerait de façon trop importante le signal CPL destiné au concentrateur 40, la mise en oeuvre des filtres F est commandée par le concentrateur 40, par exemple par pilotage d'un commutateur disposé entre chaque capacité et le câble de phase 1, 2 ou 3 auquel il est relié. En position courante, le commutateur est ouvert, le filtre est passant, le concentrateur 40 reçoit les informations des compteurs. En position « localisation des compteurs » le commutateur est fermé, le filtre est actif.

Dans un mode de réalisation, les fonctions du concentrateur 40 sont réalisées par l'un ou plusieurs des modules de mesure 21ₐ, 21_{b}.

Ainsi la présente invention permet de localiser les compteurs équipés de moyens de communication CPL installés sur le réseau de distribution, et ce même si tous les compteurs du réseau ne sont pas équipés de tels moyens de communication.

L'invention ne nécessite pas d'installation de capteurs de courant au niveau des départs basse tension. Elle peut être mise en oeuvre même lorsque les points consommateurs ne consomment pas d'énergie, le compteur communiquant associé audit point consommateur étant alors dit compteur dormant.

En outre, la présente invention ne nécessite pas d'avoir accès aux données des compteurs, telles que les courbes de charge, qui dans certains cas, sont jugées confidentielles et ne sont pas le plus souvent considérées comme la propriété du distributeur.

## Revendications

1. Procédé de localisation de points consommateurs dans un système (1) de distribution de courant électrique, dans lequel des câbles (20bN, 20b1, 20b2, 20b3) comportant chacun un départ partant d'un noeud central (D1) fournissent du courant électrique à destination de points consommateurs respectifs (10b_1, 10b_2, 10b_3, 10b_4) dotés de premiers moyens de télécommunications (31j) de type Courant Porteur en Ligne dits CPL, au moins un module de mesure (21 a, 21 b) étant adapté pour recevoir, au niveau du départ de chaque câble, des messages CPL via des seconds moyens de télécommunications (22a1-22a3, 22b1-22b3) de type CPL et pour mesurer un niveau de puissance desdits messages reçus,
ledit procédé étant **caractérisé en ce qu'il** comprend les étapes suivantes, suite à la réception, sur des départs de câbles distincts, d'un même message CPL émis par un point consommateur et indiquant un identifiant dudit point consommateur:
i/ mesures, par au moins le module de mesure, du niveau de puissance sur chacun desdits départs de câbles distincts, dudit message reçu associé audit identifiant indiqué ;
ii/ comparaison desdits niveaux de puissance mesurés ;
iii/ sélection du niveau de puissance maximum parmi les niveaux de puissance comparés ;
iv/ détermination du câble au départ duquel a été mesuré le niveau de puissance sélectionné comme étant un câble d'alimentation dudit point consommateur.

2. Procédé de localisation de points consommateurs selon la revendication 1, le module de mesure (21 a, 21 b) étant en outre adapté pour télétransmettre des données à destination d'un dispositif de collecte (40), ledit procédé comprenant une étape de télétransmission au dispositif de collecte par au moins ledit module de mesure, d'un ensemble de données indiquant l'identifiant du point consommateur ayant émis le message, ledit niveau de puissance mesuré par ledit point de mesure et un identifiant du câble au départ duquel est a été mesuré ledit niveau, en vue de la détermination par ledit point de collecte du câble d'alimentation dit point consommateur.

3. Procédé de localisation de points consommateurs selon la revendication 2, selon lequel la télétransmission est réalisée à l'aide des seconds moyens de communication CPL (22a1-22a3, 22b1-22b3).

4. Procédé de localisation selon une quelconque des revendications précédentes, selon lequel le point consommateur (10j) comportant un compteur électrique (34j) adapté pour s'incrémenter en fonction du courant consommé par ledit point consommateur associé, ledit message CPL émis par le point consommateur comporte des données indiquant un relevé de consommation électrique par ledit point consommateur.

5. Procédé de localisation selon une quelconque des revendications précédentes, selon lequel un filtre (F) est disposé entre le noeud central (D1) et un module de mesure (21 a, 21 b) installé sur un câble, en vue d'atténuer un signal CPL traversant le filtre.

6. Procédé de localisation de points consommateurs selon la revendication précédente, selon lequel l'application du filtre (F) entre le noeud central (D1) et un module de mesure (21 a, 21 b) est télécommandable.

7. Procédé de localisation selon l'une quelconque des revendications précédentes, selon lequel pour un câble donné (20bN, 20b1, 20b2, 20b3), on détermine un classement de points consommateurs (10b_1, 10b_2, 10b_3, 10b_4) déterminés à l'étape iv/ comme alimentés par ledit câble donné, en terme de distance entre chacun d'eux et le départ du câble, en fonction d'un classement des niveaux de puissance sélectionnés pour lesdits points consommateur.

8. Module de mesure (21 a, 21 b) comprenant des premiers moyens (31j) de télécommunications de type Courant Porteur en Ligne dits CPL par l'intermédiaire d'un câble conducteur de courant électrique (20bN, 20b1, 20b2, 20b3) et adapté pour, suite à la réception sur ledit câble d'un message CPL indiquant l'identifiant d'un point consommateur ayant émis le message, mesurer un niveau de puissance dudit message reçu et télétransmettre à destination d'un dispositif de collecte (40), un ensemble de données indiquant l'identifiant du point consommateur ayant émis le message, le niveau de puissance du message mesuré et un identifiant du module de mesure ou du câble conducteur.

9. Dispositif de collecte (40) d'un système (1) de distribution de courant électrique à destination de points consommateurs (10b_1, 10b_2, 10b_3, 10b_4), comprenant des moyens de télécommunications (42) avec au moins un module de mesure (21 a, 21 b) et adapté pour recevoir au moins dudit module de mesure, via lesdits moyens de télécommunication, des ensembles de données indiquant chacun un identifiant d'un point consommateur, un niveau de puissance mesuré par le dispositif de mesure sur un câble d'un message CPL envoyé par ledit point consommateur et un identifiant du câble ou du module de mesure ;
ledit dispositif de collecte étant en outre adapté pour comparer des niveaux de puissance, relatifs à un même message émis par un point consommateur déterminé qui ont été mesurés sur des câbles distincts et indiqués dans des ensembles de données reçus et, pour sélectionner un niveau de puissance maximum parmi les niveaux comparés et pour déterminer le câble au départ duquel a été mesuré le niveau de puissance sélectionné comme étant un câble d'alimentation dudit point consommateur déterminé.

10. Système (1) de distribution de courant électrique comprenant :
- des câbles (20bN, 20b1, 20b2, 20b3) comportant chacun un départ et distribuant du courant électrique à destination de points consommateurs respectifs,
- un ou plusieurs module(s) de mesure (21 a, 21 b) selon la revendication 8 adapté(s) pour mesurer des niveaux de puissances de messages CPL au départ de plusieurs câbles d'alimentation,
- un dispositif de collecte (40) selon la revendication 9.

## Patentansprüche

1. Verfahren zur Lokalisierung von Verbraucherpunkten in einem System (1) zur Verteilung von elektrischem Strom, bei dem Leitungen (20bN, 20b1, 20b2, 20b3), die jeweils einen von einem zentralen Knoten (D1) weggehenden Abgang umfassen, einen elektrischen Strom an die jeweiligen Verbraucherpunkte (10b_1, 10b_2, 10b_3, 10b_4) liefern, die mit ersten Mitteln (31j) der Telekommunikation über das Stromnetz, genannt PLC, ausgestattet sind, mindestens ein Messmodul (21a, 21b), das angepasst ist, an dem Abgang jeder Leitung PLC-Nachrichten über zweite PLC-Mittel der Telekommunikation (22a1-22a3, 22b1-22b3) zu empfangen und einen Leistungspegel der empfangenen Nachrichten zu messen, wobei das Verfahren **dadurch gekennzeichnet ist, dass** es die folgenden Schritte nach dem Empfang einer selben, von einem Verbraucherpunkt abgesandten und eine Kennung des Verbraucherpunktes angebenden PLC-Nachricht an den Abgängen von unterschiedlichen Leitungen umfasst:
i/ Messungen der empfangenen Nachricht, die der angegebenen Kennung zuordnet ist, an jedem der Abgänge der verschiedenen Leitungen des Leistungspegels durch mindestens das Messmodul;
ii/ Vergleich der gemessenen Leistungspegel;
iii/ Auswahl des maximalen Leistungspegels unter den verglichenen Leistungspegeln;
iv/ Bestimmung der Leitung, an deren Abgang der ausgewählte Leistungspegel gemessen wurde, als eine Versorgungsleitung des Verbraucherpunktes.

2. Verfahren zur Lokalisierung von Verbraucherpunkten nach Anspruch 1, wobei das Messmodul (21a, 21b) außerdem angepasst ist, Daten an eine Sammelstelle (40) fern zu übertragen, wobei das Verfahren einen Schritt der Fernübertragung eines Datensatzes, der die Kennung des die Nachricht abgesandt habenden Verbraucherpunktes, den von dem Messpunkt gemessenen Leistungspegel und eine Kennung der Leitung, an deren Abgang der Pegel gemessen wurde, durch mindestens das Messmodul an die Sammelstelle in Hinblick auf die Bestimmung der Versorgungsleitung, genannt Verbraucherpunkt, durch den Sammelpunkt umfasst.

3. Verfahren zur Lokalisierung von Verbraucherpunkten nach Anspruch 2, bei dem die Fernübertragung mit Hilfe der zweiten Mittel (22a1-22a3, 22b1-22b3) der PLC-Kommunikation realisiert wird.

4. Verfahren zur Lokalisierung nach einem beliebigen der vorhergehenden Ansprüche, bei dem der Verbraucherpunkt (10j) einen Stromzähler (34j) umfasst, der angepasst ist, in Abhängigkeit von dem durch den zugeordneten Verbraucherpunkt verbrauchten Strom zu inkrementieren, wobei die von dem Verbraucherpunkt gesandte PLC-Nachricht Daten aufweist, die eine Ablesung des elektrischen Verbrauchs des Verbraucherpunktes angibt.

5. Verfahren zur Lokalisierung nach einem beliebigen der vorhergehenden Ansprüche, bei dem ein Filter (F) zwischen dem zentralen Knoten (D1) und einem Messmodul (21a, 21b), das in einer Leitung installiert ist, angeordnet ist, um ein das Filter durchlaufende PLC-Signal zu dämpfen.

6. Verfahren zur Lokalisierung von Verbraucherpunkten nach dem vorhergehenden Anspruch, bei dem die Anwendung des Filters (F) zwischen dem zentralen Knoten (D1) und einem Messmodul (21a, 21b) fern steuerbar ist.

7. Verfahren zur Lokalisierung nach einem beliebigen der vorhergehenden Ansprüche, bei dem für eine gegebene Leitung (20bN, 20b1, 20b2, 20b3) eine Klassifizierung von Verbraucherpunkten (10b_1, 10b_2, 10b_3, 10b_4) bestimmt wird, die bei dem Schritt iv/ als durch die gegebene Leitung versorgt bestimmt wurden, hinsichtlich des Abstandes zwischen jedem von ihnen und dem Abgang der Leitung abhängig von einer Klassifizierung der ausgewählten Leistungspegel für die Verbraucherpunkte.

8. Messmodul (21a, 21b), das erste Mittel (31j) zur Telekommunikation, PLC Art, über eine Stromleitung (20bN, 20b1, 20b2, 20b3) umfasst und geeignet ist, nach Empfang einer PLC-Nachricht über die Leitung, die die Kennung eines Verbraucherpunktes, der die Nachricht abgesandt hat, anzugeben, einen Leistungspegel der empfangenen Nachricht zu messen und einen Datensatz an eine Sammelvorrichtung (40) fernzu-übertragen, der die Kennung des Verbraucherpunktes, der die Nachricht abgesandt hat, den gemessenen Leistungspegel der Nachricht und eine Kennung des Messmoduls oder der elektrischen Leitung angibt.

9. Sammelvorrichtung (40) eines Systems (1) zur Verteilung von elektrischen Strom an Verbraucherpunkte (10_1, 10b_2, 10b_3, 10b_4), die Mittel (42) zur Telekommunikation mit mindestens einem Messmodul (21a, 21b) umfasst und geeignet ist, von mindestens dem Messmodul über die Telekommunikationsmittel Datensätze zu empfangen, die jeweils eine Kennung eines Verbraucherpunktes, einen von der Messvorrichtung an einer Leitung gemessenen Leistungspegels einer PLC-Nachricht, die von dem Verbraucherpunkt gesandt wird, und eine Kennung der Leitung oder des Messmoduls angeben;
wobei die Sammelvorrichtung außerdem geeignet ist, zu einer selben von einem bestimmten Verbraucherpunkt gesandte Nachricht gehörende Leistungspegel, die an unterschiedlichen Leitungen gemessen wurden und in empfangenen Datensätzen angegeben sind, zu vergleichen und einen maximalen Leistungspegel unter den verglichenen Pegeln auszuwählen und die Leitung, an deren Abgang der ausgewählte Leistungspegel gemessen wurde, als eine Versorgungsleitung des bestimmten Verbraucherpunktes zu bestimmen.

10. System (1) zur Verteilung von elektrischem Strom, umfassend:
- Leitungen (20bN, 20b1, 20b2, 20b3), die jeweils einen Abgang aufweisen und einen elektrischen Strom an jeweilige Verbraucherpunkte verteilen,
- ein oder mehrere Messmodule (21a, 21b) nach Anspruch 8, die geeignet sind, Leistungspegel der PLC-Nachrichten am Abgang von mehreren Versorgungsleitungen zu messen,
- eine Sammelvorrichtung (40) nach Anspruch 9.

## Claims

1. Method for locating consumption points in an electric current distribution system (1), wherein cables (20bN, 20b1, 20b2, 20b3) each comprising a departure outlet departing from a central node (D1) provide electric current to respective consumption points (10b_1, 10b_2, 10b_3, 10b_4) provided with a first means of telecommunications (31j) of the Power Line Communication referred to as PLC, at least one measuring module (21 a, 21 b) able to receive, on the departure of each cable, PLC Messages via second means of telecommunication (22a1-22a3, 22b1-22b3) of the PLC type and to measure a power level of said messages received,
said method **characterised in that** it comprises the following steps, following the reception, on the departure outlets of separate cables, of the same PLC message sent by a consumption point and indicating an identifier of said consumption point:
i/ measurements, by at least the measuring module, of the power level on each of said departure outlets of separate cables, of said received associated with said identified indicated;
ii/ comparison of said levels of power measured;
iii/ selection of the maximum level of power from among the levels of power compared;
iv/ determination of the cable at the departure outlet of which was measured the power level selected as being a power cable of said consumption point.

2. Method for locating consumption points according to claim 1, with the measuring module (21a, 21b) furthermore being adapted to remotely transmit data to a collection system (40), said method comprising a step of remote transmission to the collection system by at least said measuring module, of a dataset indicating the identifier of the consumption point that has sent the message, said power level measured by said measuring point and an identifier of the cable at the departure outlet of which was measured said level, for the purpose of the determination by said collection point of the power cable referred to as consumption point.

3. Method for locating consumption points according to claim 2, according to which the remote transmission is carried out using second means for PLC communication (22a1-22a3, 22b1-22b3).

4. Method of locating according to any of the preceding claims, according to which the consumption point (10j) comprising an electricity meter (34j) adapted to increment according to the current consumed by said associated consumption point, said PLC message sent by the consumption point comprises data indicating a reading of electrical consumption by said consumption point.

5. Method of locating according to any of the preceding claims, according to which a filter (F) is arranged between the central node (D1) and a measuring module (21 a, 21 b) installed on a cable, for the purposes of attenuating a PLC signal passing through the filter.

6. Method for locating consumption points as claimed in the preceding claim, according to which the application of the filter (F) between the central node (D1) and a measuring module (21 a, 21b) can be controlled remotely.

7. Method of locating as claimed in any preceding claim, according to which for a given cable (20bN, 20b1, 20b2, 20b3), a classification of consumption points (10b_1, 10b_2, 10b_3, 10b_4) determined in the step iv/ is determined as supplied by said given cable, in terms of distance between each of them and the cable departure outlet, according to a classification of the levels of power selected for said consumption points.

8. Measuring module (21a, 21b) comprising first means (31j) of telecommunications of the Power Line Communication type referred to as PLC by the intermediary of an electrical current conductor cable (20bN, 20b1, 20b2, 20b3) and adapted to, following the reception on said cable of a PLC message indicating the identifier of a consumption point that has sent the message, measure a power level of said message received and remotely transmit to a collection system (40), a dataset indicating the identifier of the consumption point that has sent the message, the power level of the message measured and an identifier of the measuring module or of the conductor cable.

9. Collection system (40) of a system (1) for distributing electrical current to consumption points (10b_1, 10b_2, 10b_3, 10b_4), comprising means of telecommunications (42) with at least one measuring module (21a, 21b) and adapted to receive at least from said measuring module, via said means of telecommunication, datasets each indicating an identifier of a consumption point, a power level measured by the measuring device on a cable of a PLC message sent by said consumption point and an identifier of the cable or of the measuring module;
said collection system furthermore being adapted to compare levels of power, concerning the same message sent by a determined consumption point which were measured on separate cables and indicated in the datasets received and, to select a maximum level of power from among the levels compared and in order to determine the capable at the departure outlet of which was measured the power level selected as being a power cable of said determined consumption point.

10. System (1) for distributing electric current comprising:
- cables (20bN, 20b1, 20b2, 20b3) each comprising a departure outlet and distributing electric current to respective consumption points,
- one or several measuring module(s) (21 a, 21 b) according to claim 8 adapted to measure levels of power of PLC Messages at the departure outlets of several power cables,
- a collection system (40) according to claim 9.
